Europäisches Patentamt

European Patent Office

Office européen des brevets

(19)

(11) Veröffentlichungsnummer: **0 137 425**
**B1**

(12) **EUROPÄISCHE PATENTSCHRIFT**

(45) Veröffentlichungstag der Patentschrift:
07.12.88

(21) Anmeldenummer: **84111588.4**

(22) Anmeldetag: **28.09.84**

(51) Int. Cl.⁴: **G 11 B 27/30**, G 11 B 20/18,
G 11 B 20/12 // G11B20/10

(54) **Verfahren zur Auswertung eines Subcodes.**

(30) Priorität: **08.10.83 DE 3336747**

(43) Veröffentlichungstag der Anmeldung:
**17.04.85 Patentblatt 85/16**

(45) Bekanntmachung des Hinweises auf die Patenterteilung:
**07.12.88 Patentblatt 88/49**

(84) Benannte Vertragsstaaten:
**BE CH DE FR GB IT LI LU NL SE**

(56) Entgegenhaltungen:
**EP-A- 0 048 779**
**EP-A- 0 074 841**
**DE-A- 3 130 145**
**FR-A- 2 435 776**
**FR-A- 2 458 874**
**FR-A- 2 520 914**
**GB-A- 2 101 356**

**THE BKSTS, Band 65, Nr. 7, Juli 1983, Seiten 384-388,
London, GB; C. MARGADANT: "Interfacing A-V
equipment to compact disc"
ELECTRONIC COMPONENTS AND APPLICATIONS,
Band 4, Nr. 3, Mai 1982, Seiten 131-141, Eindhoven, NL;
J. MATULL: "ICs for compact disc decoders"
Lesea/Zaks: Mikroprozessor Interface Techniken, 4.
Aufl. 1982, pp. 328-332**

(73) Patentinhaber: **Deutsche Thomson-Brandt GmbH,
Hermann-Schwer-Strasse 3 Postfach 1307,
D-7730 Villingen-Schwenningen (DE)**

(72) Erfinder: **Kurz, Arthur, Terra-Wohnpark 9,
D-7730 VS-Marbach (DE)**

**Beschreibung**

Die Erfindung betrtifft ein Verfahren zur Auswertung eines aus mehreren Codeelementen bestehenden Steuercodewortes bei der Wiedergabe von auf einem scheibenförmigen Träger aufgezeichneten digitalisierten Audio- oder Videoinformationen, wobei jedes Codeelement eine von den jeweils anderen Codeelementen unabhängige Steuerinformation enthält und die Information des Steuercodewortes bei der Auswertung ignoriert wird, wenn bei der Prüfung auf Richtigkeit ein Fehler festgestellt wird.

Bei der Speicherung von Signalen, z.B. digitalisierten Audio-Signalen in Compact-Dics-Technik, werden Steuercodeworte bei der Aufnahme mitaufgezeichnet. Diese dienen zur Speicherung von Daten, die in einer sinnvollen Beziehung zu den eigentlichen Speicherdaten z.B. zum aufgespeicherten Musikprogramm stehen. Es handelt sich dabei um Informationen, die nicht für die eigentliche Audio-Übertragung bestimmt sind. So dient z.B. der sogenannten Q-Kanal eines Steuercodewortes für die Bedienung und Anzeige eines Compact-Disc-Gerätes. Die Steuercodeworte sind in einzelne sogenannte Blöcke und diese in Codeelemente unterteilt. So besteht z.B. der Q-Kanal aus 96 Bits plus zwei Synchron-BITS und enthält Informationen über die Titel-Nummer, die laufende Zeit eines Musikstückes in Minuten und Sekunden oder gibt Auskunft über den Inhalt der Audio-Platte. Die Informations-Bits der Codeelemente sind in die Daten-BITS des Audio-Programms verschachtelt eingebettet. Zur Erhaltung einer genügend grossen Redundanz werden pro Sekunde 75 Blöcke abgetastet. Auf diese Weise ist während der Wiedergabe eines Musikprogramms ein dauernder Informationsfluss über die Code-Daten möglich. Zwecks Erhaltung einer Code-Prüfung sind an die 80 Daten-BITS eines Blocks 16 Paritäts-BITS angefügt, um auf der Wiedergabeseite Informationsfehler detektieren zu können. Fehler können mit Hilfe der CRC-Methode (cyclic-redundancy-check) erkannt werden. Die Paritäts-BITS werden an die Daten-BITS derart angereiht, dass mit Hilfe des CRC, d.h., dass nach Division des Blockinhalts durch ein vorgegebenes Generator-Polynom G (x) ein Quotient ohne Rest herauskommen muss. Ergibt sich bei der Division ein Rest, liegt im Datenwort ein BIT-Fehler vor. Es ist leicht einsehbar, dass bei einer Vielzahl von BITS wie im vorliegenden Fall bei 96 BITS öfter BIT-Fehler auftreten können, so dass die ausgelesene Information von der Auswerte-Logik als wertlos deklariert und abgeworfen wird. Eine Lokalisation des BIT-Fehlers ist nicht möglich. Man kann sich leicht vorstellen, dass auf digitalen Schallplatten eine Reihe von BIT-Fehlern vorhanden sind, z.B. in Form von «drop outs». Auch mangelhafte Einstellungen am Abspielgerät können BIT-Fehler verursachen. Es können also immer wieder BIT-Fehler auch im Bereich des Q-Kanals vorkommen. Dies führt zu einer unruhigen Anzeige von angewählten Informationen, wie z.B. Programm-Nummer, abgelaufene Zeit usw. Nun werden beim Abspielen eines Musikprogramms nicht sämtliche Informationen ständig benötigt. Bei der Auswertung der kumulierten Zeit z.B. sind die übrigen Codeelemente des Datenblocks uninteressant. Sind in diesen Codeelementen jedoch BIT-Fehler vorhanden, wird mit der CRC-Prüfmethode ein Fehler des gesamten Blocks erkannt, so dass keine Information zur Verfügung steht, weil die CRC-Methode eine Aufteilung der Prüfung innerhalb des Blocks nicht erlaubt. Mit dieser Methode ist demnach eine störungsfreie Auswertung nicht immer möglich. Ausserdem erfordert die CRC-Prüfmethode einen erheblichen Rechenaufwand, da laufend die Operation der Division durch das Generator-Polynom vorgenommen werden muss.

Aus dem Buch von Lesea/Zaks «Mikroprozessor Interface Techniken», 4. Aufl., 1982, Seiten 328–332, ist eine Prüfmethode bekannt, die dazu dient, mit Hilfe der Kreuzparität nicht nur zu erkennen, dass ein Bit-Fehler in einem Codewort vorliegt, sondern auch an welcher Stelle der Bit-Fehler liegt, wobei eine Auswerteschaltung durch Invertierung des betreffenden Bits an der festgestellten Stelle des Codewortes eine Korrektur vornimmt. Hierbei wird demnach das gesamte Steuercodewort überprüft. Nach der Wahrscheinlichkeit wird bei einem 96-bit-breiten Steuercodewort viel eher ein Fehler festgestellt als bei der Überprüfung einer kleineren Anzahl von bits.

Es ist auch bekannt (DE-A-31 30 145), Daten durch Zwischenspeicherung fortlaufend mit vorangegangenen zu vergleichen. Da es sich hierbei aber auch um einen Vergleich der vollständigen Datenblöcke handelt, ist die Möglichkeit zur Erkennung eines Fehlers wohl notwendig gross, aber für den Anwendungsfall der vorliegenden Erfindung unnütz und auch nicht notwendig.

Der Erfindung liegt die Aufgabe zugrunde, die Prüfmethode zu vereinfachen und Störmöglichkeiten weitgehend auszuschliessen. Diese Aufgabe wird erfindungsgemäss durch die im Patentanspruch angegebenen Massnahmen gelöst.

Der Erfindung liegt die Erkenntnis zugrunde, dass bei Auswertung jedes Codeelementes für sich allein überproportional weniger Störungen in bezug auf die Auswertung vorkommen als bei einer Auswertung des gesamten Blocks.

Nachstehend soll die Erfindung an einem Beispiel erläutert werden.

Fig. 1 zeigt eine mögliche Schaltung zur Durchführung des Verfahrens;

Fig. 2 zeigt ein das Verfahren beschreibendes Fluss-Diagramm.

Aus dem Sub-Codewort 1 wird ein interessierendes auszuwertendes Codeelement 2 herausgegriffen. Die Daten-BITS dieses ausgewählten Codeelements werden in ein erstes Register 3 ($R_0$) eingelesen. Eine Steuerschaltung 4 aktiviert über eine Datenleitung 5 dieses Register. Der Ausgang A der Steuerschaltung 4 schaltet ein Tor 6 durchlässig, so dass die Daten in das über die Leitung 5 aktivierte Register 7 ($R_1$) gelangen. (Erste Einleseperiode.) Daraufhin werden neue Daten in das erste Register 3 ($R_0$) geschrieben. (Zweite Einleseperiode.) Die Steuerschaltung 4 bringt die in den beiden Registern 3 (R$_0$) und 7 (R$_1$) gespeicherten Daten über die Datenleitung 8 und 9 an eine Vergleichsstufe 10. Bei positivem Ergebnis, d.h. bei Gleichheit, gibt die Fehlererkennungsschaltung 11 ein Signal an die Stufe 12 ab, welche die Daten aus dem Register 3 zur Auswertung durchschaltet. Fällt der Vergleich negativ aus, sperrt die Fehler-Erkennungsschaltung 11 die Stufe 12 und gibt an die Steuerschaltung 4 gleichzeitig ein Signal, wonach die Steuerschaltung 4 über ihren Ausgang B das Tor 13 öffnet, wonach die in dem ersten Register 3 (R$_0$) eingelesenen Daten in das von der Steuerschaltung 4 über die Leitung 5 aktivierte Register 14 (R$_2$) gelangen. Die eingelesenen aktuellen neuen Daten im Register 3 (R$_0$) werden mit den zuletzt eingelesenen im Register 14 (R$_2$) abgelegten Daten in der Vergleichsstufe 15 verglichen. Falls der Vergleich negativ ausfällt, gelangt über die Fehlererkennungsschaltung 16 ein Signal an die Steuerschaltung 4. Hierdurch wird ein Vergleich des Inhalts des Registers 3 (R$_0$) aus der dritten Einleseperiode mit dem Inhalt des Registers 7 (R$_1$) aus der ersten Einleseperiode vorgenommen. Der Vergleich findet über die Vergleichsstufe 10 statt. Bei positivem Ergebnis wird über die Fehlererkennungsschaltung 11 die Stufe 12 zur Durchschaltung der Daten freigegeben. Bei negativem Ergebnis erzeugt die Fehlererkennungsschaltung 11 ein Signal für die Steuerschaltung 4, die das Register 7 (R$_1$) freigibt, so dass über das geöffnete Tor 6 die aktuellen Daten der dritten Einleseperiode aus dem Register 3 (R$_0$) eingeschrieben werden, die für einen nachfolgenden Vergleich aus der vierten Einleseperiode in der Vergleichsstufe 10 zur Verfügung stehen.

Nach vorbeschriebener Weise können sämtliche einzelnen Codeelemente eines Q-Blocks getrennt überprüft werden, indem ein entsprechendes Fenster zur Selektierung eines bestimmten Codeelements gesetzt wird.

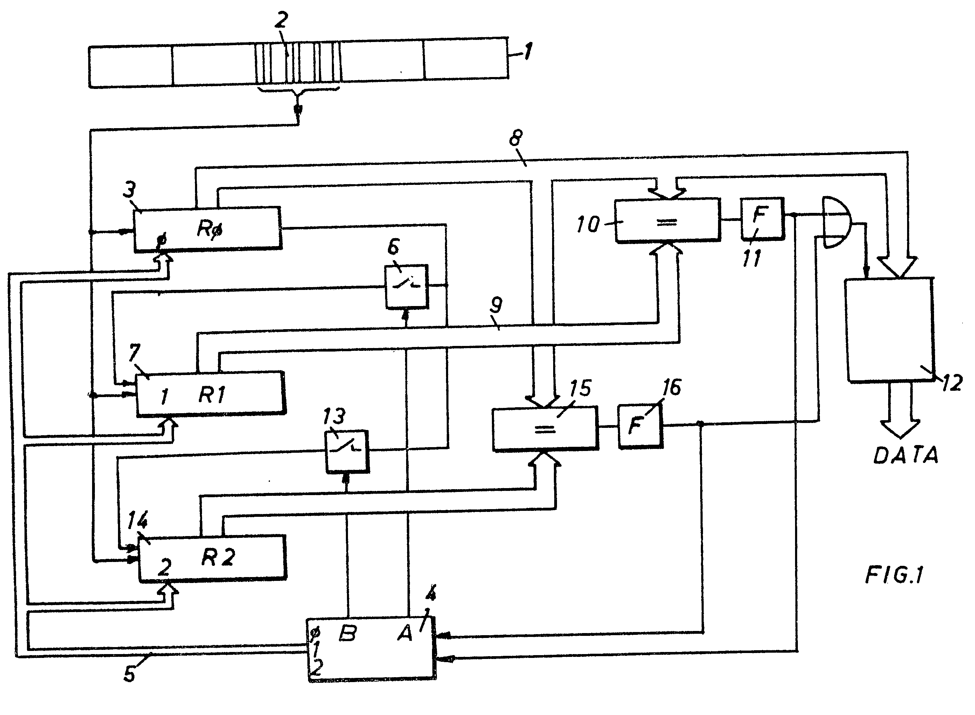

Der mit Hilfe der Fig. 1 beschriebene Aufwand kann durch eine geeignete Zusammenfassung der Vergleichsstufen 10 und 15 sowie der Fehlererkennungsschaltung 11 und 16 zu jeweils einer einzigen von der Steuerschaltung 4 gesteuerten Schaltung reduziert werden.

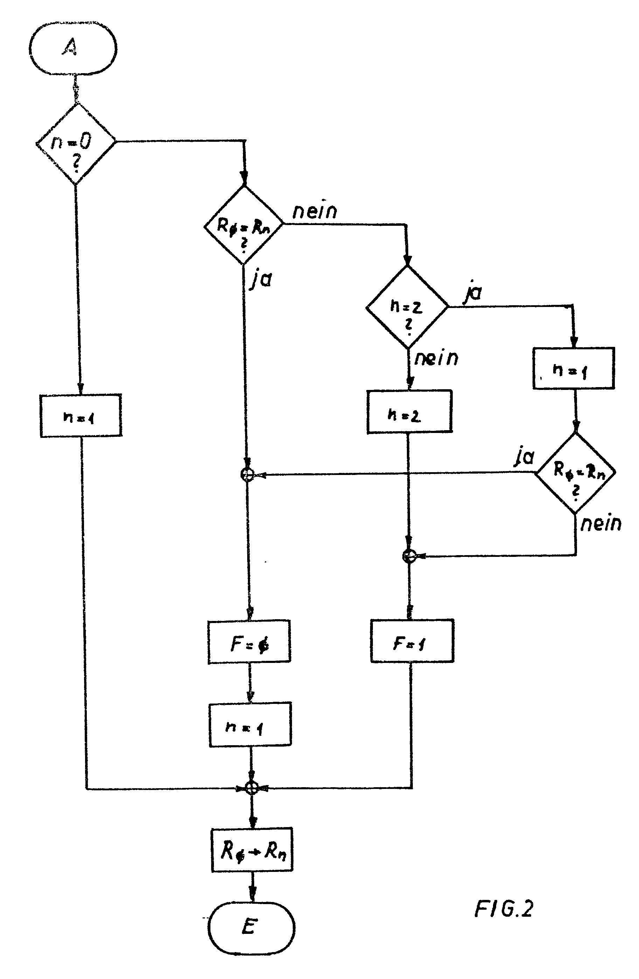

In Fig. 2 ist das soeben beschriebene Verfahren in Form eines Flussdiagramms aufgezeichnet. Die zu prüfenden Daten aus dem selektierten Codeelement des Blocks gelangen über A an eine Abfrage eines Einleseperiodenzählers, welcher die Anzahl der eingelesenen Codeelemente zählt. Nach Einschalten des Gerätes, z.B. des Compact-Disc-Gerätes, steht dieser Zähler auf Null. Danach wird der Zähler auf n = 1 gesetzt. Die eingelesenen Daten werden vom Einlaufregister R$_0$ in das erste Register R$_1$ überschrieben.

Es findet nun der erste Vergleich statt, indem der Inhalt des zweiten Dateneinlaufs, der sich nun im Einlaufregister R$_0$ befindet, mit den im Register R$_1$ gespeicherten Daten aus der ersten Dateneinleseperiode verglichen wird. Bei positivem Ergebnis wird eine Marke F = 0 gesetzt, d.h., dass die Daten im Register 1 gültig, d.h. richtig sind. Der Zähler wird auf n = 1 gesetzt und der Inhalt des Registers R$_0$ in das Register R$_1$ überschrieben.

Falls der Vergleich negativ ausfällt, wird in einer weiteren Stufe der Zählerstand nach n = 2? abgefragt. Da bis dahin der Zähler auf n = 1 stand, wird nun dieser auf n = 2 gesetzt, wodurch der im Register R$_0$ befindliche Inhalt aus der zweiten Einleseperiode in das Register R$_2$ überschrieben wird. Die Marke wird auf 1 gesetzt zur Anzeige, dass die Daten ungültig, d.h. falsch, sind.

Nun gelangt der dritte Dateneinlauf über A an die Abfrage n = 0? Da der Zähler aber auf n = 2 steht wird der Inhalt aus der dritten Einleseperiode des Registers R$_0$ mit dem Inhalt des Registers R$_2$ aus der vorhergehenden zweiten Einleseperiode verglichen. Bei positivem Ergebnis wird die Marke F = 0 gesetzt zur Anzeige, dass die Daten gültig, d.h. richtig, sind. Der Zähler wird daraufhin auf n = 1 gesetzt, wonach die Daten aus dem Register R$_0$ in das Register R$_1$ überschrieben werden, um für den nächsten Dateneinlauf der vierten Einleseperiode zur Verfügung zu stehen.

Bei negativem Entscheid wird der Zählerstand nach n = 2? abgefragt, worauf dieser auf n = 1 zurückgesetzt wird. Die aus der dritten Einleseperiode in R$_0$ befindlichen Daten werden nun mit denjenigen im Register R$_1$ befindlichen verglichen. Bei positivem Ergebnis wird wieder die Marke F = 0 gesetzt. Bei negativem Ergebnis dagegen wird die Ungültigkeit der Daten mit F = 1 angezeigt und die Daten aus der dritten Einleseperiode aus dem Register R$_0$ in das Register R$_1$ geschoben. Dadurch stehen diese Daten aus der dritten Einleseperiode für den nachfolgenden Datenvergleich nach der vierten Einleseperiode als Referenz zur Verfügung.

Das mit Hilfe der Fig. 1 beschriebene Verfahren bezieht sich auf einen Dreier-Vergleich von nacheinander eingelesenen Daten eines Codeelements. Bei weniger hohen Genauigkeitsanforderungen kann auch ein Zweier-Vergleich von Daten zweier aufeinander folgender Codeelemente vorgenommen werden, wodurch der Aufwand zur Durchführung des Verfahrens um einiges reduziert werden kann.

**Patentanspruch**

1. Verfahren zur Auswertung eines aus mehreren Codeelementen bestehenden Steuercodewortes bei der Wiedergabe von auf einem scheibenförmigen Träger aufgezeichneten digitalisierten Audio- oder Videoinformationen, wobei jedes Codeelement eine von den jeweils anderen Codeelementen unabhängige Steuerinformation enthält und die Information des Steuercodewortes bei der Auswertung ignoriert wird, wenn bei der Prüfung auf Richtigkeit ein Fehler festgestellt wird, dadurch gekennzeichnet, dass die Prüfung auf Richtigkeit durch fortlaufenden Vergleich der Daten jedes ausgewählten Codeelementes mit den Daten zumindest eines vorausgegangenen, zwischengespeicherten die gleiche Steuerinformation beinhaltenden Codeelements erfolgt.

## Claim

1. Method of analysing a control codeword comprising several code elements in the reproduction
of digitalised audio or video data recorded on a
disc medium, each code element containing an
item of control information which is independent of
all the other code elements and the control codeword data being ignored in the analysis if an error
is detected when a check for correctness is made,
characterised in that the check for correctness is
performed by continuous comparison of the data
from each selected code element with the data
from at least one preceding, buffer-stored code
element which contains the same control information.

## Revendication

1. Procédé pour évaluer un mot de code de
commande constitué par plusieurs éléments de
code, lors de la reproduction d'informations audio
ou vidéo numérisées, enregistrées sur un support
en forme de disque, chaque élément de code
contenant une information de commande indépendante des autres éléments de code respectifs et
l'information du mot de code de commande étant
ignorée lors de l'évaluation lorsque la présence
d'une erreur est établie lors du contrôle de l'exactitude, caractérisé en ce que le contrôle de l'exactitude est exécuté au moyen d'une comparaison
permanente des données de chaque élément de
code sélectionné avec les données d'au moins un
élément de code précédent, mémorisé temporairement et contenant la même information de
commande.

FIG.1

DATA

FIG.2